Europäisches Patentamt

European Patent Office

Office européen des brevets

(19)

(11) Veröffentlichungsnummer : **0 073 527**
**B1**

# (12) EUROPÄISCHE PATENTSCHRIFT

(45) Veröffentlichungstag der Patentschrift :
05.03.86

(21) Anmeldenummer : 82108097.5

(22) Anmeldetag : 02.09.82

(51) Int. Cl.⁴ : **C 10 G 49/02, B 01 J 21/18**

(54) Verfahren zum Hydrieren von Schwer- und Rückstandsölen und dafür verwendete Katalysatoren.

Verbunden mit 82902670.7/0099887 (europäische Anmeldenummer/Veröffentlichungsnummer) durch Entscheidung vom 07.12.84.

(30) Priorität : 02.09.81 DE 3134638

(43) Veröffentlichungstag der Anmeldung :
09.03.83 Patentblatt 83/10

(45) Bekanntmachung des Hinweises auf die Patenterteilung : 05.03.86 Patentblatt 86/10

(84) Benannte Vertragsstaaten :
AT BE CH DE FR GB IT LI LU NL SE

(56) Entgegenhaltungen :
DE-A- 2 353 990
DE-C- 445 252
WALTER KRÖNIG: "Die katalytische Druckhydrierung von Kohlen, Teeren und Mineralölen", Springer Verlag, Berlin/Göttinger/Heidelberg, 1950, Seiten 79,80

(73) Patentinhaber : Rheinische Braunkohlenwerke AG.
Stüttgenweg 2
D-5000 Köln 41 (DE)

(72) Erfinder : Lenz, Uwe, Dr.
Heideweg 7
D-5020 Frechen (DE)
Erfinder : Böcker, Dietrich, Dr.-Ing.
Goethestrasse 25
D-5040 Brühl (DE)
Erfinder : Dolkemeyer, Wilfried, Dr.
Liebigstrasse 14
D-5047 Wesseling (DE)
Erfinder : Giehr, Axel, Dr.
Zeisigweg 1
D-5047 Wesseling (DE)
Erfinder : Ritter, Günter, Dr.
Goethestrasse 29
D-5040 Brühl (DE)

(74) Vertreter : Koepsell, Helmut, Dipl.-Ing.
Mittelstrasse 7
D-5000 Köln 1 (DE)

**Beschreibung**

Die Erfindung betrifft ein Verfahren zum katalytischen Behandeln von Schwer- und Rückstandsölen mit Wasserstoff in Gegenwart von Braunkohlenkoks als Katalysator und/oder als Katalysatorträger, wobei bei der Verwendung als Katalysatorträger der Braunkohlenkoks mit katalytisch aktiven Metallen, vorzugsweise mit deren Sulfaten, anderen Salzen, Oxiden bzw. Sulfiden oder Gemischen derselben, wässriger Natronlauge sowie Schweröl vermischt und die Mischung feinstgemahlen den zu hydrierenden Schwer- und Rückstandsölen zugesetzt wird.

Verfahren zum Aufarbeiten von Schwer- und Rückstandsölen in der Sumpfphasehydrierung unter Verwendung von Braunkohlenkoks und Braunkohlengrude als Katalysator oder Katalysatorträger sind an sich bekannt. So beschreibt z. B. Krönig in seinem Buch « Die katalytische Druckhydrierung von Kohlen, Teeren und Mineralölen », Springer-Verlag Berlin, Göttingen, Heidelberg 1950, Seite 79, Zeilen 13 und 14 : « Als besonders geeigneter (Katalysator-) Träger hat sich aktivierte Braunkohlengrude (bei der Ölhydrierung) erwiesen... ».

Auf der gleichen Seite, Zeilen 25-29 heißt es :

« Den günstigsten Effekt gibt eine in längerer Einwirkungszeit bei 900 °C mit Wasserdampf aktivierte Grude ; ausreichend ist aber schon die Aktivierung, die Braunkohle oder Braunkohlengrude bei der staubförmigen Vergasusng — z. B. in Winkler-Generatoren (damaliger Niederdruck-Winkler-Generator) — erhält (Winklerstaub) ... », wobei jedoch eine Fahrweise des Winkler-Generators auf relativ geringen Ausbrand (hoher verbleibender Kohlenstoffgehalt) erforderlich ist.

Auf Seite 80 seines Buches gibt Krönig sodann an (Zeilen 6-8), daß das auf die Grude imprägnierte Metall- (Eisen-) sulfat mit Natronlauge umzusetzen sei. Schließlich wird ausgeführt, daß für die Wirksamkeit des Katalysators dessen Feinmahlung wichtig sei, wobei der trocken grob vorgemahlene Katalysator in (möglichst asphaltfreien) Öl zu einem Katalysatorbrei feingemahlen werden soll (Zeile 15).

Dieser Stand der Technik lehrt demnach, daß der bei der Vergasung oder Verschwelung erhaltene Braunkohlenkoks mit Wasserdampf und Sauerstoff aktiviert werden muß oder, falls Winkler-Staub verwendet wird, auf relativ geringen Ausbrand im Winkler-Generator gefahren werden muß, um auf diese Weise einen für die Ölhydrierung brauchbaren Katalysator bzw. Katalysatorträger zu gewinnen.

Abgesehen davon, daß aus der Winkler-Vergasung mit relativ geringem Ausbrand erzeugter Winklerstaub nicht in ausreichenden Mengen zur Verfügung steht, da aus wirtschaftlichen Erwägungen die Vergasungsprozesse nach dem Winkler-Verfahren auf eine möglichst vollständige Vergasung der eingesetzten Braunkohle gerichtet sind, hat es sich auch gezeigt, daß das Aktivieren des Braunkohlenkokses mit Wasserdampf sehr aufwendig und teuer ist, nicht zuletzt wegen der relativ langen Einwirkungszeit und der hohen Temperaturen.

Ferner offenbart die DE-A 23 53 990 ein Verfahren zur Herstellung schwefelarmer Heizöle sowie Benzine und Mitteldestillate aus Rückständen der Erdöldestillation mit hohem Metall- und Asphaltgehalt, bei welchem Braunkohlenhochtemperaturkoks (BHT-Koks) als Katalysator verwendet wird. Bei diesem Braunkohlenhochtemperaturkoks handelt es sich um einen Formkoks, dessen Herstellung zusätzliche Maßnahmen, z. B. Brikettieren, erfordert. Die Katalysatorwirkung auch dieses BHT-Kokses erscheint verbesserbar.

Der Erfindung liegt daher die Aufgabe zugrunde, die bekannten Katalysatoren bzw. Katalysatorträger auf Braunkohlenbasis möglichst durch ausreichend verfügbare und noch wirksamere Katalysatoren bzw. Katalysatorträger auf Braunkohlenbasis zu ersetzen.

Zur Lösung dieser Aufgabe schlägt die Erfindung vor, daß der als Katalysator und/oder Katalysatorträger verwendete Braunkohlenkoks als Feinkoks in einem Herdofen oder als Staub in einem Hochtemperatur-Winkler-Vergasungsgenerator (HTW-Staub) gewonnen wurde. Die Höhe des Ausbrands spielt dabei für den HTW-Staub keine Rolle. Der Braunkohlenfeinkoks erlaubt darüber hinaus noch eine höhere Durchsatzleistung bei der Behandlung von Schwer- und Rückstandsölen mit Wasserstoff.

Besonders vorteilhaft ist die Tatsache, daß sowohl HTW-Staub als auch Herdofenkoks bereits in undotiertem Zustand, also ohne Zugabe von katalytisch aktiven Metallen, überraschend gute katalytische Eigenschaften aufweisen.

Im allgemeinen wird es zweckmäßig sein, daß der Katalysator in Konzentrationen von 0,1-10 Gew.-%, bezogen auf das zu hydrierende Schweröl zugesetzt wird.

Bei der Verkokung im Herdofen wird feingemahlene und vorgetrocknete Braunkohle über Fallrohre am Aussenrand der Herdofenplatte aufgegeben und wandert unter deren ständiger Drehung und der Einwirkung der feststehenden Rührschaufeln langsam zur Mitte, von wo aus der fertige Koks ausgetragen wird. Beim Durchgang treten die flüchtigen Bestandteile aus der Braunkohlen-/Koksschüttung aus und werden unter Luftzufuhr von aussen oberhalb der Koksschüttung teilweise verbrannt. Der Verkokungsprozess wird über diese Verbrennung eines Teils der flüchtigen Bestandteile geführt, d. h. es wird unter Luftmangel gearbeitet, so dass jeweils nur eine solche Menge an flüchtigen Bestandteilen verbrennt, wie zur Aufrechterhaltung der Verkokungstemperatur benötigt wird. Das Verkoken von Braunkohle im Herdofen erfolgt im allgemeinen ohne Zufuhr von Wasserdampf oder Wasser von aussen, da der Wassergehalt der vorgetrockneten Braunkohle so eingestellt werden kann, dass Koks mit den gewünschten Eigenschaften erhalten wird.

**0 073 527**

Ausführungsbeispiel

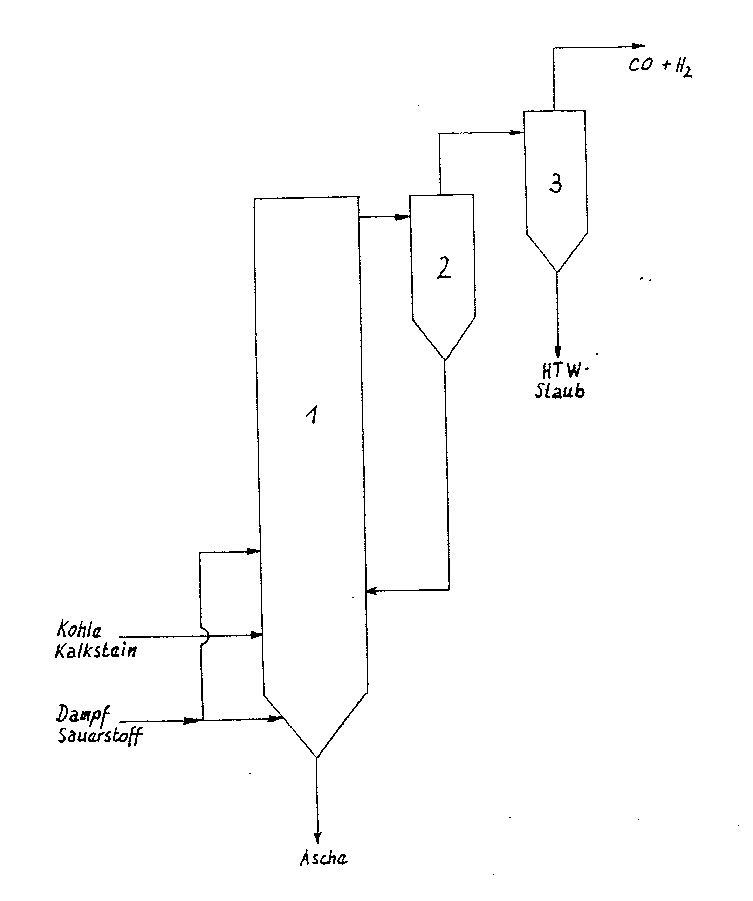

Die Figur zeigt die Gewinnung des HTW-Staubs. Dem Hochtemperatur-Winklergenerator 1 ist ein Zyklon 2 nachgeschaltet, über den nicht vergaste Anteile dem Generator wieder zugeführt werden. Der HTW-Staub wird in einem Zyklon 3 gewonnen. Da die Gasgeschwindigkeit im HTW-Winkler-Generator wesentlich höher ist als im früheren Niederdruck-Generator, ist der Kreislauf-Zyklon 2 erforderlich, während der Niederdruck-Generator nur einen Zyklon im Rohgasstrom besass.

Niederdruck-Staub und HTW-Staub unterscheiden sich in wesentlichen Eigenschaften, wie aus einer typischen Analyse (Tabelle 1) hervorgeht :

Tabelle 1

|  | HTW |  | Niederdruck |
|---|---|---|---|
| Wassergehalt | 1- 5 Gew. % | | 0,6 Gew. % |
| Aschegehalt | 15- 65 Gew. % | | 38,0 Gew. % |
| C-Gehalt | 22- 80 Gew. % | | 60-65 Gew. % |
| Eisen-Gehalt | 0,1 - 2 Gew. % | | 5- 7 Gew. % |

Es wurde gemäss vorliegender Erfindung weiterhin gefunden, dass die Wirksamkeit des Braunkohlenherdofenkokses und des HTW-Staubs als Katalysator noch weiter dadurch gesteigert werden kann, dass diese mit einer Lösung einer Metallverbindung behandelt werden.

Der üblicherweise als Katalysator bzw. Katalysator-Träger in Betracht kommende Braunkohlenfeinkoks hat eine Körnung, die kleiner als 6 mm ist. Sein Porenvolumen beträgt bei Porenradien kleiner $10^5$ Angström ungefähr 50 %.

Eine mittlere Siebanalyse von HTW-Staub ergibt folgende Korngrössenverteilung :

| Durchmesser in μm | Anteil in % |
|---|---|
| > 2 000 | 0,02 |
| 1 000-2 000 | 0,04 |
| 500-1 000 | 0,5 |
| 315-500 | 2,0 |
| 315-200 | 6,0 |
| 200-125 | 10 |
| 125-90 | 7 |
| 90-63 | 5 |
| 63-50 | 5 |
| Durchmesser in μm | Anteil in % |
| 50-40 | 3 |
| 40-32 | 10 |
| < 32 | 51,5 |

Beim Einsatz des HTW-Staubs als Katalysator (-Träger) empfiehlt sich das Absieben des Grobanteils > 90 μm oder Mahlung auf einen Durchmesser von < 90 μm.

50 % Des Porenvolumens des HTW-Staubs besitzen Porenradien < 2 000 Å. Die Oberfläche beträgt > 300 m²/g.

Wie bereits bei Krönig gelehrt, kann die Wirksamkeit der neuartigen Katalysatoren durch Behandlung mit Sulfaten von katalytisch aktiven Metallen gesteigert werden. Ein nach der Erfindung hergestellter Katalysator auf Basis Braunkohlenfeinkoks enthält z. B. 98 Gewichtsanteile an Braunkohlenfeinkoks mit 2 Gewichtsteilen Sulfaten oder anderen Verbindungen in äquivalenter Menge von Fe, Mo, Co, Wo, d. h. katalytisch aktiver Schwermetalle und 100 Gewichtsteile Schweröl und soviel wässrige Natronlauge (NaOH), dass ein wässriger Auszug aus dieser Mischung eine Basizität von ungefähr $pH_5$ bis $pH_8$ aufweist. Das Verhältnis Katalysatorträger zu Metallsalz kann jedoch in weiten Grenzen variiert werden.

Die Herstellung der Mischung erfolgt zweckmässigerweise so, dass Herdofenkoks und/oder HTW-Staub im Mischer vorgelegt werden und nach Inbetriebsetzen des Mischers die Zugabe der Metallsalzlösung durch Düsen erfolgt, um eine gleichmässige Durchmischung zu erhalten. Anschliessend kann dann die Natronlauge eingedüst werden, gefolgt vom Schwerölzusatz.

Anstelle der Sulfate der genannten Metalle können auch andere Salze bzw. Oxide bzw. Sulfide verwendet werden. Wird die obige Mischung etwa eine Stunde lang in einer Kugelmühle bei einer Temperatur von 95 °C gemahlen, liegt der Katalysator als pulvriger Feststoff mit einer Korngrösse von kleiner als 0,1 mm vor.

Gleichwertige Katalysatoren können auch beim Mahlen in anderen Mühlen erhalten werden.

Die Wirksamkeit der neuen Katalysatoren im Vergleich zu bisher bekannten Katalysatoren aus aktivierter Braunkohlengrude ist in Tabelle 2 dargestellt.

3

Die Ergebnisse beruhen auf Hydrierungen bei 450 °C von Schwer- bzw. Rückstandsöl bestehend aus 50 Gew.% eines Vakuumdestillats mit Siedebereich 350-500 °C und 50 % eines Rückstandsöls mit Siedebereich 500 °C. Hydrierungen mit den erfindungsgemässen Katalysatoren können in weiten Grenzen von 380-500 °C durchgeführt werden, wobei der Bereich von 420-480 °C bevorzugt ist. Bei den Vergleichsversuchen wurde bei einem Druck von 300 bar gearbeitet. Es ist jedoch dem Fachmann bekannt, dass die Hydrierungen wie sie in der Sumpfphase durchgeführt werden, in weiten Druckgrenzen variiert werden können. Auch der Reaktortyp, der zur Hydrierung verwendet wird, kann je nach gestellten Anforderungen beliebig gewählt werden.

Die Behandlung der Katalysatoren mit $FeSO_4$ erfolgte wie auf Seite 6 angegeben.

(Siehe Tabelle 2 Seite 5 f.)

4

Tabelle 2

| Versuchs-Nr. | Katalysator | Produkte in Gew. % | | | relativer Durchsatz |
|---|---|---|---|---|---|
| | | Gas | Destillat | Rückstand 500°C | |
| 1 | — | 5 | 70 | 25 | 1,0 |
| 2 | Niederdruck-Winkler-Staub (60 Gew.% C; 5 Gew.% Fe) | 6,5 | 72 | 21,5 | 1,5 |
| 3 | Niederdruck-Winklerstaub wie unter 2, zusätzlich mit $FeSO_4$ behandelt | 8 | 73 | 19 | 1,5 |
| 4 | Herdofenkoks | 12 | 75 | 13 | 2,5 |
| 5 | HTW-Staub (25 Gew. % C, 1 Gew. % Fe) | 11 | 75 | 14 | 2,5 |
| 6 | HTW-Staub (25 Gew. % C), mit $FeSO_4$ behandelt (5% $FeSO_4$ bezogen auf den Träger) | 13 | 79 | 8 | 2,5 |
| 7 | wie 6, jedoch 10 % $FeSO_4$, bezogen auf den Träger | 13 | 80 | 7 | 2,6 |
| 8 | HTW-Staub (70 Gew. % C), mit $FeSO_4$ behandelt (5 % $FeSO_4$ bezogen auf den Träger) | 13 | 79 | 8 | 2,5 |
| 9 | HTW-Staub (25 Gew. % C), mit Mo dotiert | 12 | 81 | 7 | 2,7 |
| 10 | Herdofenkoks mit $FeSO_4$ behandelt (5% $FeSO_4$ bezogen auf den Träger) | 10 | 83 | 7 | 3,0 |

Die Tabelle zeigt, dass die erfindungsgemässen Katalysatoren für den Fachmann unerwartet gute Eigenschaften haben, die eine wesentliche Verbesserung gegenüber dem Stand der Technik darstellen.

Wie auf Seite 1, Abs. 3 ausgeführt, ist man bisher davon ausgegangen, dass geeigneter Winkler-Staub bei geringem Ausbrand erzeugt werden muss, so dass ein relativ hoher C-Gehalt im Staub vorhanden ist. Zudem war im Falle des Niederdruck-Winklerstaubs (ND-Staub) bekannt, dass mit zunehmendem Eisengehalt im Staub selbst eine zunehmende Aktivität des Katalysators einherging. Versuch 2 ergibt die Produktverteilung bei Verwendung eines ND-Staubs mit einem Kohlenstoffgehalt von 60 Gew.% und einem Eisengehalt von 5,5 Gew.%. Die zusätzliche Behandlung mit $FeSO_4$ und NaOH ergibt wie Versuch 3 zeigt, keine wesentliche Verbesserung.

Überraschend wurde gefunden, wie Versuch 5 zeigt, dass bei Verwendung von HTW-Staub mit nur 25 Gew.% C, also bei hohem und demgemäss sehr wirtschaftlichem Ausbrand im Generator, Ergebnisse erhalten werden, die trotz niederem Fe-Gehalt im Staub diejenigen der Versuche 2 und 3 wesentlich übertreffen. Hieraus geht deutlich hervor, dass die andersartige Fahrweise der HTW-Generator-Anlage gegenüber der ND-Generator-Anlage zu einem Staub führt, der vom Fachmann nicht vorhersehbare verbesserte katalytische Eigenschaften besitzt.

Die besseren Eigenschaften sind bei grosstechnischen Anlagen mit Durchsätzen von 1,9 Mio. t Braunkohle pro Jahr ein bedeutender technischer Fortschritt, der einen wichtigen Beitrag zur verbesserten Nutzung schwerer Öle darstellt.

Auch aus den Versuchen 6 und 8 wird deutlich, daß der Ausbrand für die katalytischen Eigenschaften des HTW-Staubs ohne Bedeutung ist. Sie zeigen jedoch, daß die Fe-Dotierung eine weitere Verbesserung der katalytischen Eigenschaften bewirkt.

In Versuch 9 wurde HTW-Staub mit $(NH_4)_2MoO_4$ behandelt, wobei die molare Menge Mo den in Versuch 6 und 8 eingesetzten Fe-Mengen entspricht. Die Dotierung mit Mo ergibt zwar eine Verbesserung gegenüber der Fe-Dotierung, jedoch wird aus wirtschaftlichen Gründen die Fe-Dotierung bevorzugt.

In Versuch 9 wurde das Verhältnis $FeSO_4$/Katalysatorträger gegenüber Versuch 6 verdoppelt. Hierdurch wird, wie die Zahlen zeigen, das Ergebnis verbessert.

Wie Versuch 4 zeigt, führt auch Herdofenkoks zu deutlich besseren Ergebnissen als die bekannten ND-Staub-Katalysatoren. Die besten Ergebnisse wurden jedoch mit einem Herdofenkoks erhalten, der mit Fe dotiert war. Hierbei ist besonders die unerwartete Erhöhung des relativen Durchsatzes hervorzuheben.

In beiden Fällen, also sowohl bei Verwendung von in einem Herdofen gewonnenen Braunkohlenfeinkoks als auch bei HTW-Generator-Staub gilt, daß der Katalysator vorteilhaft in Konzentrationen von 0,1 bis 10 Gew.-%, bezogen auf die zu hydrierenden Schwer- und Rückstandsöle, zugesetzt wird.

## Patentansprüche

1. Verfahren zum katalytische Behandeln von Schwer- und Rückstandsölen mit Wasserstoff in Gegenwart von Braunkohlenkoks als Katalysator und/oder als Katalysatorträger, wobei bei der Verwendung als Katalysatorträger der Braunkohlenkoks mit katalytisch aktiven Metallen, vorzugsweise mit deren Sulfaten, anderen Salzen, Oxiden bzw. Sulfiden oder Gemischen derselben, wässriger Natronlauge sowie Schweröl vermischt und die Mischung feinstgemahlen den zu hydrierenden Schwer- und Rückstandsölen zugesetzt wird, dadurch gekennzeichnet, daß der Braunkohlenkoks als Feinkoks vorliegt und in einem Herdofen gewonnen wurde.

2. Verfahren zum katalytischen Behandeln von Schwer- und Rückstandsölen mit Wasserstoff in Gegenwart von Staub, der bei der Vergasung von Braunkohle in einem Winkler-Vergasungsgenerator anfällt, als Katalysator und/oder als Katalysatorträger, wobei bei der Verwendung als Katalysatorträger der im Winkler-Vergasungsgenerator gewonnene Staub mit katalytisch aktiven Metallen, vorzugsweise mit deren Sulfaten, anderen Salzen, Oxiden bzw. Sulfiden oder Gemischen derselben, wässriger Natronlauge sowie Schweröl vermischt und die Mischung feinstgemahlen den zu hydrierenden Schwer- und Rückstandsölen zugesetzt wird, dadurch gekennzeichnet, daß der Staub in einem Hochtemperatur-Winkler-Vergasungsgenerator gewonnen wurde.

3. Verfahren nach Anspruch 1 oder 2, dadurch gekennzeichnet, daß der Katalysator in Konzentrationen von 0,1 bis 10 Gew.-%, bezogen auf die zu hydrierenden Schwer- und Rückstandsöle, zugesetzt wird.

4. « Verwendung von als Feinkoks in einem Herdofen oder als Staub in einem Hochtemperatur-Winkler-Vergasungsgenerator gewonnener Braunkohlenkoks als Katalysator oder Katalysatorträger in der katalytischen Behandlung von Schwer- und Rückstandsölen mit Wasserstoff ».

## Claims

1. A method of catalytic treatment of heavy and residual oils with hydrogen in the presence of brown coal coke as a catalyst and/or as a catalyst carrier wherein, when used as the catalyst carrier, the brown coal coke is mixed with catalytically active metals, preferably with their sulphates, other salts, oxides or sulphides or mixtures thereof, aqueous soda lye and heavy oil, and the mixture is added in finely ground form to the heavy and residual oils to be hydrogenated, characterised in that the brown coal coke is in the form of fine coke and was produced in a hearth-type furnace.

2. A method of catalytic treatment of heavy and residual oils with hydrogen in the presence of dust which is produced in the gasification of brown coal in a Winkler gasification generator as a catalyst and/or as a catalyst carrier wherein, when used as a catalyst carrier, the dust which is produced in the Winkler gasification generator is mixed with catalytically active metals, preferably with their sulphates, other salts, oxides or sulphides or mixtures thereof, aqueous soda lye and heavy oil, and the mixture is added in finely ground form to the heavy and residual oils to be hydrogenated, characterised in that the dust was produced in a high-temperature Winkler gasification generator. ·

3. A method according to claim 1 or claim 2 characterised in that the catalyst is added in concentrations of from 0.1 to 10 % by weight with respect to the heavy and residual oils to be hydrogenated.

4. Use of brown coal coke which is produced in the form of fine coke in a hearth-type furnace or in the form of dust in a high-temperature Winkler gasification generator, as a catalyst or catalyst carrier in the catalytic treatment of heavy and residual oils with hydrogen.


**Revendications**

1. Procédé de traitement catalytique d'huiles lourdes et résiduaires par l'hydrogène, en présence de coke de lignite servant de catalyseur et/ou de support d'un catalyseur, le procédé consistant, lorsqu'on utilise le coke de lignite comme support d'un catalyseur, à le mélanger avec des métaux ayant un effet catalytique, et de préférence avec des sulfates de ces métaux, ou avec d'autres sels tels que des oxydes et des sulfures, ou des mélanges de ces sels, et avec une lessive de soude caustique aqueuse ainsi qu'avec de l'huile lourde, pour broyer très finement le mélange ainsi obtenu, et l'ajouter aux huiles lourdes et résiduaires qu'il s'agit d'hydrogéner, procédé caractérisé en ce qu'on utilise un coke de lignite en particules fines obtenu dans un four à sole.

2. Procédé de traitement catalytique d'huiles lourdes et résiduaires par l'hydrogène, en présence de poussier obtenu à l'issue de la gazéification du lignite dans un générateur de gazéification de Winkler, ce poussier servant de catalyseur et/ou de support d'un catalyseur, le procédé consistant, lorsqu'on utilise comme support d'un catalyseur le poussier obtenu dans un réacteur de gazéification de Winkler, à le mélanger avec des métaux ayant un effet catalytique, et de préférence avec des sulfates de ces métaux, ou avec d'autres sels tels que des oxydes et des sulfures, ou des mélanges de ces sels, et avec une lessive de soude caustique aqueuse ainsi qu'avec de l'huile lourde, pour broyer très finement le mélange ainsi obtenu, et l'ajouter aux huiles lourdes et résiduaires qu'il s'agit d'hydrogéner, procédé caractérisé en ce qu'on utilise un poussier obtenu dans un générateur de gazéification de Winkler opérant à haute température.

3. Procédé selon l'une des revendications 1 ou 2, caractérisé en ce qu'on ajoute le catalyseur à des concentrations pondérales comprises en 0,1 et 10 %, par rapport aux huiles lourdes et résiduaires qu'il s'agit d'hydrogéner.

4. A titre de produit industriel nouveau, coke de lignite, caractérisé en ce qu'il est obtenu sous forme de particules fines dans un four à sole, ou sous forme de poussier dans un générateur de gazéification de Winkler opérant à haute température, et en ce qu'il est utilisé comme catalyseur ou support d'un catalyseur, pour un traitement d'hydrogénation catalytique d'huiles lourdes et résiduaires.

CO + H₂

3

2

1

HTW·
Staub

Kohle
Kalkstein

Dampf
Sauerstoff

Ascha

1